# EUROPÄISCHE PATENTANMELDUNG

(11) **EP 1 683 562 A1**
(43) Veröffentlichungstag der Anmeldung: **26.07.2006**
(21) Anmeldenummer: 06000437.1
(22) Anmeldetag: 11.01.2006
(51) Int. Cl.: B01D 33/48, B01D 33/00, B01D 33/04

(54) **Reinigungsvorrichtung für Filterbänder**

(30) Priorität: 20.01.2005 DE 102005002844
(71) Anmelder: KNOLL MASCHINENBAU GMBH, 88348 Bad Saulgau (DE)
(72) Erfinder: Mack, Gerhard, 88521 Ertingen (DE)
(74) Vertreter: Eisele, Otten, Roth & Dobler

(57) **Zusammenfassung**

Es wird eine Reinigungsvorrichtung für Filterbänder (4), insbesondere für Bandfilteranlagen zur Aufbereitung von Kühlschmiermitteln von Werkzeugmaschinen vorgeschlagen, bei der der Verschleiß sowohl auf Seiten des Filterbandes (4) als auch auf Seiten der Reinigungsvorrichtung reduziert bzw. vollständig unterbunden wird. Dies wird erfindungsgemäß dadurch erreicht, dass eine Blaseinheit (21) zum Durchblasen des Filterbandes (4) von der dem Filterkuchen (18) gegenüberliegenden Rückseite des Filterbandes (4) her vorgesehen ist.

## Beschreibung

Die Erfindung betrifft eine Reinigungsvorrichtung für Filterbänder nach dem Oberbegriff des Anspruchs 1.

Für Filterbänder, insbesondere von Bandfilteranlagen zur Aufbereitung von Kühlschmiermittel von Werkzeugmaschinen sind bereits unterschiedliche Vorrichtungen zur Reinigung des Filterbandes von dem darauf abgelagerten Filterkuchen bekannt geworden.

Mit der Druckschrift DE 88 06 372 wird beispielsweise eine Reinigung des Filterbandes vorgeschlagen, bei der ein flüssiges Medium unter Druck auf das Filterband gesprüht wird. Diese Art der Filterbandreinigung hat sich in der Praxis nicht durchgesetzt.

Eine mechanische Abstreifvorrichtung ist beispielsweise in der Druckschrift DE 20 2004 008 233 U1 offenbart. Mechanische Abstreifvorrichtungen weisen indes den Nachteil auf, dass durch die mechanische Belastung des Filterbandes dieses im Laufe der Zeit derart geschwächt wird, dass die Gefahr des Einreißens besteht. Die Filterbänder unterliegen somit einem hohen Verschleiß und müssen entsprechend oft ausgetauscht werden. Auch die Abstreifer unterliegen einem entsprechenden Verschleiß und müssen regelmäßig gewartet oder erneuert werden.

Aufgabe der Erfindung ist es, eine Reinigungsvorrichtung vorzuschlagen, mittels der der Verschleiß sowohl auf Seiten des Filterbandes als auch auf Seiten der Reinigungsvorrichtung reduziert bzw. vollständig unterbunden wird.

Diese Aufgabe wird ausgehend von einer Reinigungsvorrichtung der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Reinigungsvorrichtung dadurch aus, dass eine Blaseinheit zum Durchblasen des Filterbandes auf der dem Filterkuchen gegenüberliegenden Rückwand vorgesehen ist. Es hat sich gezeigt, dass auf diese Weise eine weitgehende Reinigung des Filterbandes ohne wesentliche mechanische Belastung möglich ist. Der Filterkuchen kann durch den auf der Rückseite in das Filterband eintretenden Luftstrom nahezu vollständig vom Filterband getrennt werden, so dass er unter Einwirkung des Gravitation nach unten fällt und dort aufgefangen werden kann.

Durch den nahezu verschleißfreien Betreib entfällt sowohl die bisherige aufwendige Wartung der Reinigungsvorrichtung sowie der häufige Austausch des Filterbandes, der bei bisherigen Reinigungsvorrichtungen notwendig war.

In einer besonderen Ausführungsform der Erfindung wird eine Blaseinheit vorgesehen, die eine sich im Wesentlichen über die Breite des Filterbandes erstreckende Düsenanordnung umfasst. Unter der Breite des Filterbandes ist hierbei wenigstens die Breite zu verstehen, die mit dem Filterkuchen während des Filterbetriebes belegt wird.

Durch eine derart ausgebildete Düsenanordnung ist eine Entfernung des Filterkuchens möglich, ohne die Düsenanordnung zu bewegen. Grundsätzlich sind jedoch auch Düsenanordnungen denkbar, die beweglich angeordnet sind, um die gewünschte Fläche des Filterbandes abzureinigen.

In einer besonderen Ausführungsform der Erfindung umfasst die Blaseinheit ein sich über die Breite des Filterbandes erstreckendes Rohr mit wenigstens einer Düsenöffnung. Eine solche Düsenanordnung bietet einerseits den Vorteil, dass die Zufuhr des zum Durchblasen verwendeten Fluids, beispielsweise von Luft über einen stirnseitigen Anschluss möglich ist. Weiterhin kann ein solches Rohr auch an einer oder mehreren Stellen zwischen den Stirnseiten durch einen entsprechenden Abzweig leicht angeschlossen werden.

Darüber hinaus kann ein solches Rohr mit vergleichsweise wenig Aufwand über eine gewisse Länge, die beispielsweise der Breite des zu reinigenden Filterbandes entspricht mit den gewünschten Düsenöffnungen versehen werden.

Derartige Düsenöffnungen können beispielsweise über die Länge des Rohres verteilte Bohrungen sein. In einer bevorzugten Ausführungsform wird jedoch ein durchgehender Schlitz angebracht, so dass gewährleistet ist, dass das Filterband gleichmäßig über die gewünschte Breite von dem zum Durchblasen verwendeten Fluid, beispielsweise Druckluft durchströmt wird.

Als Fluid bietet sich zweckmäßigerweise Druckluft an, die mittels eines Druckluftgenerators aus der Umgebungsluft erzeugt wird. In entsprechenden Anwendungen können jedoch auch andere gasförmige Fluide eingesetzt werden. Insbesondere bei entsprechend chemisch reaktiven Filterkuchen wäre eine Fluidauswahl ohne Sauerstoff von Vorteil.

In einer Weiterbildung der Erfindung wird auf der den Filterkuchen tragenden Vorderseite des Filterbandes ein Umlenk- und/oder Prallelement vorgesehen. Dieses Umlenk- und/oder Prallelement verhindert das breite Verstreuen des abgeblasenen Filterkuchens in der Umgebung der Reinigungsvorrichtung. Der Filterkuchen fällt vielmehr nach der Umlenkung oder dem Abprallen an dem Umlenk- und/oder Prallelement in einer definierten Fallzone nach unten.

Vorzugsweise wird der abgeblasene Filterkuchen durch einen Auffangbehälter aufgefangen, der unterhalb des Ortes angeordnet ist, an dem der Filterkuchen abgeblasen wird. Im Falle der Verwendung eines Umlenk- und/oder Prallelementes kann ein solcher Auffangbehälter entsprechend kleiner dimensioniert werden, da durch die Umlenkung oder das Abprallen des Filterkuchens die Fallzone des Filterkuchens eingeschränkt ist. In dieser Ausführungsform wird der Auffangbehälter daher unter dem Umlenk- und/oder Prallelement angeordnet.

In einer weiteren vorteilhaften Ausführungsform der Erfindung wird ein Taktbetrieb für den Blasvorgang vorgesehen. Auf diese Weise ist es möglich, den Filterkuchen mit Druckstößen von dem Filterband abzublasen. Dies verbessert zum einen das Reinigungsergebnis, zum anderen kann hierbei ein Druckluftgenerator verwendet werden, der einen vergleichsweise kleinen Volumenstrom erzeugt. Der Taktbetrieb kann beispielsweise durch ein Taktventil erzielt werden, das zwischen dem Druckluftgenerator und der Düsenanordnung angeordnet wird und über eine entsprechende Steuervorrichtung ansteuerbar ist.

Vorteilhafterweise wird ein solcher Taktbetrieb so ausgestaltet, dass der gewünschte Druckstoß bzw. die gewünschten Druckstöße synchron mit dem Vorschub des Filterbandes ausgelöst werden. In vielen Anwendungen von Bandfilteranlagen findet ohnehin nur ein taktweiser Vorschub des Filterbandes statt, um die Filterwirkung des sich bildenden Filterkuchens besser auszunutzen. In dieser Ausführungsform wird daher die Standzeit des Filterbandes dazu genutzt, um über den Taktbetrieb bzw. das Durchblasen mit Druckstößen den Aufwand auf Seiten des Druckluftgenerators zu reduzieren.

Durch den Taktbetrieb kann darüber hinaus ein Druckgenerator genutzt werden, der für eine andere Funktion ohnehin vorhanden ist und diese anderweitige Funktion während der Ruhephasen des Taktbetriebes wahrnehmen kann.

In einer besonderen Ausführungsform wird als Druckgenerator der Abluftausgang einer ohnehin vorhandenen Unterdruckpumpe vorgesehen. Manche Bandfilteranlagen verfügen bereits ohnehin über eine Vakuum- oder Unterdruckanlage, z.B. um das zu filternde Medium aktiv am Ort des Filtervorgangs durch das Filterband zu ziehen. Naturgemäß ist der Volumenstrom in der Abluft einer Unterdruckpumpe begrenzt. Die Verwendung der Abluft einer Unterdruckpumpe ist daher insbesondere in Verbindung mit dem oben angeführten Taktbetrieb von Vorteil.

Darüber hinaus kann in einem Taktbetrieb die Abluftseite der Unterdruckpumpe in den Standzeiten des Filterbandes bzw. den Ruhezeiten der Blasanordnung zumindest zeitweise zur Umgebungsluft hin geöffnet werden, um den Aufbau eines unerwünschten Gegendrucks auf der Abluftzeit der Unterdruckpumpe zu vermeiden und somit deren ursprüngliche Funktion besser zu gewährleisten.

In einer Weiterbildung der Erfindung in der Ausführungsform mit der Nutzung einer Unterdruckpumpe als Druckgenerator kann weiterhin ein Zuluftventil auf Seiten des Zulufteingangs der Unterdruckpumpe vorgesehen werden, mittels dem eine gewünschte Luftmenge, z.B. aus der Umgebungsluft für die Eintritt in die Unterdruckpumpe freigegeben werden kann. Auf diese Weise kann ein stärkerer Druckstoß im Abluftausgang der Unterdruckpumpe durch wenigstens zeitweises Öffnen des Zuluftventils erzielt werden.

Um das zuvor erzeugte Vakuum bzw. den zuvor erzeugten Unterdruck bei Öffnen des Zuluftventils wenigstens teilweise aufrecht zu erhalten, empfiehlt es sich in dieser Ausführungsform, zusätzlich ein Rückschlagventil auf der Zuluftseite der Unterdruckpumpe vorzusehen. Ein solches Rückschlagventil unterbricht die Verbindung der Zuluftseite der Unterdruckpumpe mit der entsprechenden Filterkomponente, die im Filterbetrieb mit Unterdruck beaufschlagt wird.

Die erfindungsgemäße Reinigungsvorrichtung ist bei unterschiedlichsten Filterbändern einsetzbar. So können beispielsweise Filtergewebe oder aber auch sogenannte Vliese mit dieser Reinigungsvorrichtung gereinigt werden.

Insbesondere bei Verwendung von Geweben ist es möglich, dass an den Kreuzungspunkten einzelner Fasern quasi im Windschatten dieser Kreuzungspunkte kleine Partikel des Filterkuchens beim Durchblasen haften bleiben.

Um das Filterband auch von diesen Restpartikeln zu befreien empfiehlt es sich, der Blaseinheit nachgeschaltet eine Spüleinheit zum Durchspülen des Filterbandes vorzusehen. Es hat sich gezeigt, dass diese Restpartikel durch ein nachträgliches Durchspülen nahezu vollständig entfernbar sind, so dass im Anschluss daran ein im Wesentlichen vollständig gereinigtes Filterband zur weiteren Verwendung vorliegt.

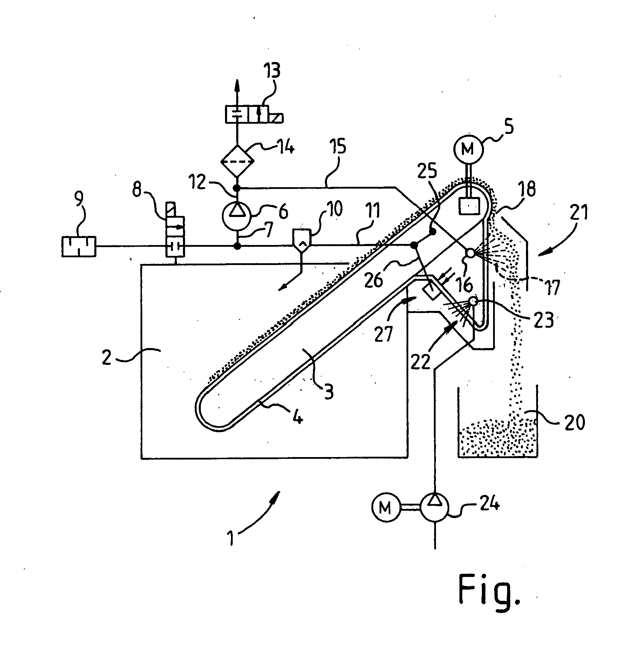

Ein Ausführungsbeispiel der Erfindung ist in der Zeichnung dargestellt und wird anhand der Figuren nachfolgend näher erläutert.

Die einzige Figur zeigt einen schematischen Schnitt durch eine erfindungsgemäße Bandfilteranlage mit Schaltdiagramm zur Fluidsteuerung.

Im Einzelnen zeigt die Bandfilteranlage 1 einen Filterbehälter 2, in den das zu filternde Medium, z.B. Kühlschmiermittel einer Werkzeugmaschine auf nicht näher dargestellte Weise eingefüllt wird.

In den Filterbehälter 2 ragt eine schräg angeordnete Filterkassette 3 hinein, um die ein Filterband 4 umlaufend angeordnet ist. Das Filterband 4 wird über einen Motor 5 angetrieben.

Im Inneren der Filterkassette 3 wird über eine Unterdruckpumpe 6, z.B. eine Turbinenradpumpe ein Unterdruck erzeugt, so dass das zu filternde Fluid, z.B. Kühlschmiermittel in das Innere der Filterkassette 3 gezogen wird.

Die Zuluftleitung 7 der Unterdruckpumpe 6 ist über ein Steuerventil 8 und einen Schalldämpfer 9 mit der Umgebungsluft verbindbar. Um das Ansaugen von Flüssigkeit, z.B. Kühlschmiermittel zu vermeiden, ist ein Abscheider 10 in der Unterdruckleitung 11 für die Filterkassette 3 vorgesehen.

Die Abluftleitung 12 der Unterdruckpumpe 6 ist über ein Steuerventil 13 mit der Umgebungsluft verbindbar, so dass im normalen Filterbetrieb der Aufbau eines unerwünschten Gegendrucks vermieden wird. Ein Filter 14 verhindert dabei den Ausstoß von etwaigen restlichen Verunreinigungen der Luft.

Die Abluftleitung 12 ist weiterhin mit einer Druckluftleitung 15 verbunden, an die eine Rohrdüse 16 angeschlossen ist. Anstelle des Ventils 13 könnte auch ein Mehrwegeventil am Ort der Abzweigung der Druckluftleitung 15 angeordnet werden. Die Rohrdüse 16 umfasst, wie durch einzelne Strahlen 17 dargestellt, verschiedene Düsenöffnungen für eine divergierende Luftströmung. Alternativ könnte auch eine nicht näher dargestellte schlitzförmige Düsenöffnung vorgesehen werden.

Die aus der Abluftleitung 12 durch die Rohrdüse 16 strömende Druckluft durchströmt das Filterband 4 von der dem Filterkuchen 18 gegenüberliegenden Rückseite her. Durch das Durchblasen des Filterbandes 4 wird der Filterkuchen 18 gegen ein auf der den Filterkuchen tragenden Vorderseite des Filterbandes angeordnetes Umlenk- und/oder Prallelement, z.B. in Form eines abgekanteten Leitblechs 19 geblasen. An dem Leitblech 19 prallt der abgeblasene Filterkuchen 18 zusammen mit der zugehörigen Luftströmung auf und wird nach unten umgelenkt, so dass der Filterkuchen 18 in einen Auffangbehälter 20 unterhalb der Rohrdüse 16 bzw. unterhalb des Leitblechs 19 fällt.

Die erfindungsgemäße Blaseinheit 21 umfasst demnach alle vorgenannten Elemente zur Erzeugung eines Druckluftstoßes in der Rohrdüse 16 sowie das auf der gegenüberliegenden Seite des Filterbandes 4 angeordnete Leitblech 19 als Umlenk- und/oder Prallelement.

In der dargestellten Ausführungsform der Erfindung ist die Rohrdüse 16 in einem kleinen Abstand vom Filterband 4 angeordnet. In einer abgewandelten Ausführungsform kann die Rohrdüse 16 auch so angeordnet werden, dass das Filterband 4 unmittelbar auf der Düsenöffnung bzw. den Düsenöffnungen aufliegt. Die aufliegende Variante bietet den Vorteil, dass sich innerhalb des Filterbandes durch den auf der gegenüberliegenden Seite des Filterkuchens gebildeten Strömungswiderstandes solange ein Druck aufbaut, bis sich der Filterkuchen auf der gegenüberliegenden Seite löst und somit das Entweichen der Luft zur Vorderseite des Filterbandes 4 hin ermöglicht.

Der Blaseinheit 21 nachgeschaltet ist in der vorliegenden Ausführungsform eine Spüleinheit 22 vorgesehen. Die Spüleinheit 22 umfasst eine Spüldüse 23, durch die mittels einer Pumpe 24 eine Spülflüssigkeit, z.B. sauberes Kühlschmiermittel von der Rückseite her auf das Filterband 4 aufgebracht wird. Durch die Spüleinheit 22 werden etwaige nach dem Blasvorgang noch auf dem Filterband 4 haftende Partikel nahezu restlos entfernt.

Auch die Spüldüse 23 kann unmittelbar auf das Filterband 4 aufgelegt werden, um die entsprechende Wirkung mittels der Spülflüssigkeit zu erzielen.

Die Unterdruckleitung 10 ist über den Anschluss 25 nicht nur mit der Filterkassette, sondern über eine Abzweigung 26 auch mit einer Trocknungsvorrichtung 27 verbunden. Die Trocknungsvorrichtung 27 trocknet durch Ansaugen von Umgebungsluft durch das Filterband das gespülte Filterband 4. In dieser Ausführung hat die Unterdruckpumpe 6 demnach mindestens drei Funktionen.

Mit Hilfe des Steuerventils 13 ist ein stoßweiser Betrieb der Blaseinheit 21 möglich. Während der Ruhezeiten ist dabei gewährleistet, dass bei geöffnetem Steuerventil 13 kein unerwünschter Gegendruck auf der Abluftseite der Unterdruckpumpe 6 entsteht.

Durch das Steuerventil 8 kann der durch das Schließen des Steuerventils 13 erzeugte Druckstoß durch Ansaugen von Umgebungsluft verstärkt werden. Eine nicht näher dargestellte zugehörige Steuereinheit sorgt hierbei für die Synchronisation der Schalttakte der Steuerventile 8 und 13 sowie des Bandvorschubs des Filterbandes 4 durch den Motor 5.

Die dargestellte Ausführungsform stellt eine besonders günstige erfindungemäße Lösung dar, bei der das Filterband 4 nahezu vollständig gereinigt wird. Wesentlich bei der Erfindung ist jedoch ausschließlich die Anordnung einer Blaseinheit 21 mit einer Anströmung des Filterbandes 4 auf der dem Filterkuchen gegenüberliegenden Rückseite des Filterbandes 4.

### Bezugszeichenliste:

- 1: Bandfilteranlage
- 2: Filterbehälter
- 3: Filterkassette
- 4: Filterband
- 5: Motor
- 6: Unterdruckpumpe
- 7: Zuluftleitung
- 8: Steuerventil
- 9: Schalldämpfer
- 10: Abscheider
- 11: Unterdruckleitung
- 12: Abluftleitung
- 13: Steuerventil
- 14: Filter
- 15: Druckluftleitung
- 16: Rohrdüse
- 17: Strahl
- 18: Filterkuchen
- 19: Leitblech
- 20: Auffangbehälter
- 21: Blaseinheit
- 22: Spüleinheit
- 23: Spüldüse
- 24: Pumpe
- 25: Anschluss
- 26: Abzweigung
- 27: Trocknungsvorrichtung

## Patentansprüche

1. Reinigungsvorrichtung für Filterbänder, insbesondere für Bandfilteranlagen zur Aufbereitung von Kühlschmiermitteln von Werkzeugmaschinen, **dadurch gekennzeichnet, dass** eine Blaseinheit (21) zum Durchblasen des Filterbandes (4) von der dem Filterkuchen (18) gegenüberliegenden Rückseite des Filterbandes (4) her vorgesehen ist.

2. Vorrichtung nach Anspruch 1, **dadurch gekennzeichnet, dass** die Blaseinheit (21) eine auf der Rückseite des Filterbandes (4) angeordnete Düsenanordnung (16) umfasst.

3. Vorrichtung nach einem der vorgenannten Ansprüche, **dadurch gekennzeichnet, dass** die Blaseinheit (21) eine sich im Wesentlichen über die Breite des Filterbandes (4) erstreckende Düsenanordnung (16) umfasst.

4. Vorrichtung nach einem der vorgenannten Ansprüche, **dadurch gekennzeichnet, dass** die Blaseinheit (21) ein sich im Wesentlichen über die Breite des Filterbandes (4) erstreckendes Rohr (16) mit wenigstens einer Düsenöffnung umfasst.

5. Vorrichtung nach einem der vorgenannten Ansprüche, **dadurch gekennzeichnet, dass** die Blaseinheit (21) ein geschlitztes Rohr umfasst.

6. Vorrichtung nach einem der vorgenannten Ansprüche, **dadurch gekennzeichnet, dass** ein Umlenk- und/oder Prallelement (19) auf der den Filterkuchen tragenden Vorderseite des Filterbandes (4) vorgesehen ist.

7. Vorrichtung nach einem der vorgenannten Ansprüche, **dadurch gekennzeichnet, dass** ein Auffangbehälter (20) unterhalb des Umlenk- und/oder Prallelementes (19) vorgesehen ist.

8. Vorrichtung nach einem der vorgenannten Ansprüche, **dadurch gekennzeichnet, dass** ein Druckgenerator (6) vorgesehen ist.

9. Vorrichtung nach einem der vorgenannten Ansprüche, **dadurch gekennzeichnet, dass** wenigstens ein Taktventil (13) zum Takten des zum Durchblasen verwendeten Fluidstroms vorgesehen ist.

10. Vorrichtung nach einem der vorgenannten Ansprüche, **dadurch gekennzeichnet, dass** als Druckgenerator der Abluftausgang (12) einer Unterdruckpumpe (6) vorgesehen ist.

11. Vorrichtung nach einem der vorgenannten Ansprüche, **dadurch gekennzeichnet, dass** ein Zuluftventil (8) mit dem Zulufteingang (7) der Unterdruckpumpe (6) verbunden ist.

12. Vorrichtung nach einem der vorgenannten Ansprüche, **dadurch gekennzeichnet, dass** ein Rückschlagventil (10) auf der Zuluftseite der Unterdruckpumpe (6) vorgesehen ist.

13. Vorrichtung nach einem der vorgenannten Ansprüche, **dadurch gekennzeichnet, dass** eine der Blaseinheit (21) nachgeschaltete Spüleinheit (22) zum Spülen des Filterbandes (4) mit einer Spülflüssigkeit vorgesehen ist.

14. Bandfilteranlage, insbesondere zur Aufbereitung von Kühlschmiermitteln von Werkzeugmaschinen, **dadurch gekennzeichnet, dass** eine Reinigungsvorrichtung nach einem der vorgenannten Ansprüche vorgesehen ist.

15. Werkzeugmaschine mit Bandfilteranlage, **dadurch gekennzeichnet, dass** die Bandfilteranlage gemäß Anspruch 13 ausgebildet ist.
